# EUROPEAN PATENT APPLICATION

(11) **EP 4 647 291 A1**
(43) Date of publication of application: **12.11.2025**
(21) Application number: 25174958.6
(22) Date of filing: 08.05.2025
(51) Int. Cl.: B60L 58/14, B60L 53/51, B60L 53/53, B60L 53/57, B60L 53/62, B60L 53/63, B60L 53/67

(54) **CHARGING STATION COMPRISING A CANOPY AND A CHARGHING SYSTEM TO CHARGE ELECTRIC VEHICLES BY MEANS OF RENEWABLE ENERGY SOURCES**

(30) Priority: 10.05.2024 IT 202400010639
(71) Applicant: ML Green S.r.l., 60035 Jesi (AN) (IT)
(72) Inventor: BERRETTINI, Luigi, 60035 JESI (AN) (IT); MASSACCESI, Michele, 60131 ANCONA (IT)
(74) Representative: Baldi, Claudio

(57) **Abstract**

Charging station comprising a canopy and a charging system (100) for charging electric vehicles with renewable energy sources; said charging system (100) comprising: renewable energy generators (1) suitable for converting the energy from renewable energy sources into generated DC electric power (p), first detection means (2) that detect the electric power (p) generated by the renewable energy generators (1), a storage means (3) that receives and stores the generated electric power (p) so that said storage means (3) contains a storage power (c), second detection means (4) suitable for detecting the storage power (c) stored in the storage means (3), a DC/AC inverter (5) that receives DC output power (a) from the storage means (3) and converts it into AC supply power (e), at least one socket (71, 72) suitable for being connected to a charging connector (H1) of a vehicle (H), at least one power controller for each socket (71, 72) that receives the supply power (e), a control unit (6) that manages the power controllers according to the generated electric power (p) and to the storage power (c).

## Description

The present patent application for industrial invention relates to a charging station comprising a canopy and a charging system to charge electric vehicles using renewable energy sources.

Electric vehicles of plug-in type have become increasingly popular in recent years. Said electric vehicles are equipped with an electric charging connector connected to a battery of the vehicle that powers an electric motor of the vehicle.

In order to charge the battery of the vehicle, it is necessary to use charging columns that are installed in public charging stations or in the homes of the owners of the electric vehicles.

Therefore, to charge the battery of the vehicle, the user goes to the charging station, activates the column to charge the battery of the vehicle and connects a socket of the column to the connector of the vehicle.

In order to reduce the consumption of electricity from the mains, said columns are associated with electricity generation systems that use renewable energy sources.

By way of example, it is common for the charging columns to be associated with a system that uses solar energy and comprises:
- photovoltaic panels that convert solar radiation into electric power,
- a battery that stores the electric power generated by the photovoltaic panels, and
- an inverter that converts the DC power from the battery into AC power suitable for powering the socket of the charging column.

However, these electric charging systems are impaired by drawbacks due to inefficient management of the power generated by the photovoltaic panels and of the power stored in the battery.

In fact, said charging systems are not designed to provide energy to electric vehicles in an intelligent manner, taking into account the status of the charging system, i.e., the amount of power generated by the photovoltaic panels and the amount of power stored in the battery. Otherwise said, said systems provide energy to the sockets unconditionally, regardless of the actual capacity of the system to provide said energy.

To ensure a constant supply of charging power, said systems are connected to the public mains that is responsible for constantly powering the inverter and the other electronic components of the charging column and for replacing the battery when the battery is unable to meet the energy requirements of the vehicle connected to the socket of the charging column, either because the battery has been discharged in the meantime or because the photovoltaic panels are unable to produce energy due to weather conditions.

The connection of the charging system to the public mains results in several problems.

A first problem is a financial problem because the user must bear the costs of using the electricity from the mains that constantly powers the inverter and eventually powers the vehicle connected to the charging column when the charging system is unable to meet the energy requirements of the vehicle. Furthermore, if the charging column is installed in a public charging station, the canopy must be equipped with payment systems for the user to pay for the consumed energy from the mains by card or cash.

A second issue concerns the fact that it is necessary to make the connections to the mains during the installation of the charging column, having obtained the municipal authorizations and licenses, with the usual bureaucratic complications.

CN115042653A discloses an electric charging system according to the prior art, such as those described above, which is connected to the public mains to receive energy from the public mains in the event that the system is unable to meet the energy requirements of a vehicle connected to a socket.

CN111654073A discloses a remotely controllable charging station. The charging station described in CN111654073A does not describe intelligent ways to efficiently manage the energy generated by the charging station.

The purpose of the present invention is to devise a new charging system to charge electric vehicles in an intelligent way, which is capable of controlling the amount of power supplied to the electric vehicles according to an amount of power generated and stored by the charging system.

A further purpose of the present invention is to devise a totally self-sufficient charging system that does not need to be connected to an external supply network.

Another purpose of the present invention is to devise a charging station comprising a canopy associated with said charging system, wherein the canopy is inexpensive to make and easy to install.

These purposes are achieved in accordance with the invention with the characteristics listed in the attached independent claim 1.

Advantageous embodiments appear from the dependent claims.

The charging station according to the invention is defined by claim 1.

For greater clarity, the description of the charging station according to the invention continues with reference to the attached drawings, which are for illustrative purposes only and are not limiting, wherein:
Fig. 1 is a block diagram illustrating the parts of the charging system of the charging station according to the invention;
Fig. 1A is a block diagram illustrating in particular the parts of the control unit of the charging system of the charging station according to the invention;
Fig. 2 shows a look-up table of the control unit for illustrative purposes;
Fig. 3 is a front view of the charging station comprising a charging canopy and the charging system of Fig. 1;
Fig. 4 is an axonometric view of the charging station of Fig. 3.

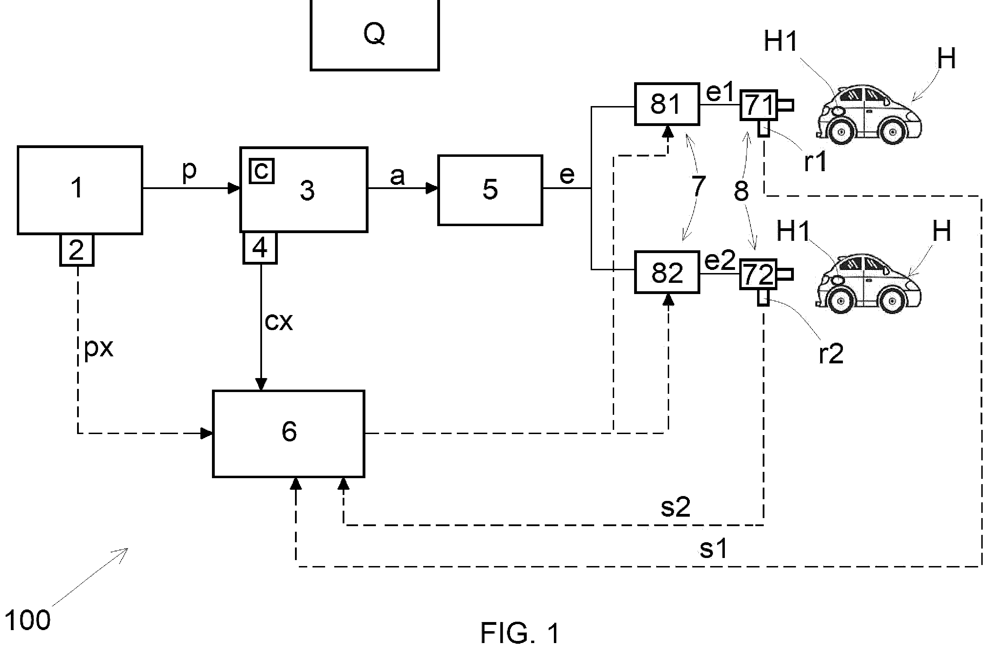

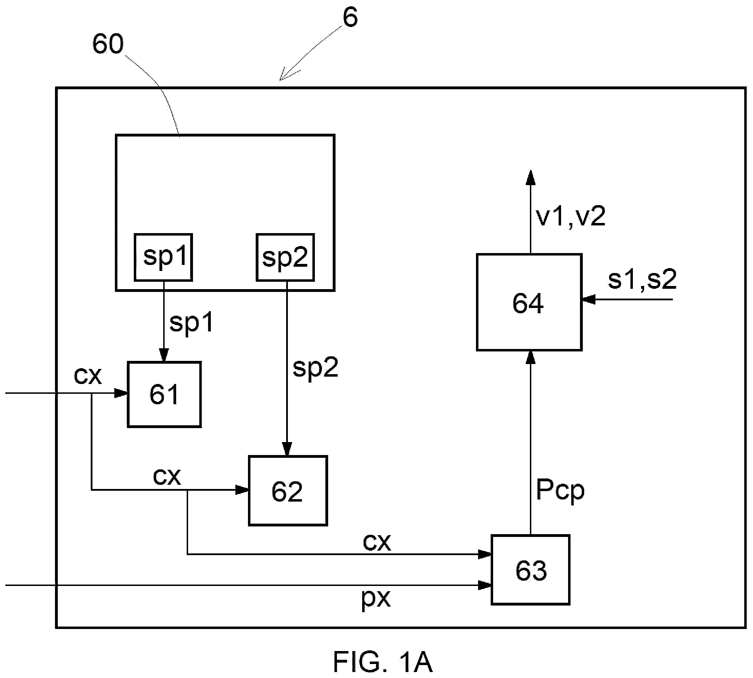

With reference to Fig. 1, a charging system of the charging station according to the invention is described. The charging system of the charging station is comprehensively indicated with reference numeral "100."

The charging system (100) used to charge electric vehicles comprises renewable energy generators (1) configured to convert energy from renewable energy sources into generated DC electric power (p).

In particular, said renewable energy generators (1) comprise photovoltaic panels (10) comprising photovoltaic cells and configured to convert solar radiation into generated DC electric power (p).

Together with the photovoltaic panels (10), the renewable energy generators (1) may also comprise micro wind turbines suitable for converting wind energy into generated DC electric power (p).

The charging system (100) comprises first detection means (2) configured to detect the generated DC electric power (p) from the renewable energy generators (1) and generate a first datum (px) indicative of the generated electric power (p). By way of example, the first detection means (2) comprise a magnetic toroid or other sensors according to the prior art, which are capable of detecting the electric power (p) generated by the renewable energy generators (1).

The charging system (100) further comprises a storage means (3) electrically connected to the renewable energy generators (1) to receive and store the generated electric power (p) from the renewable energy generators (1), so that a storage power (c) is present in said storage means (3). The storage means (3) is configured to output a DC output power (a).

By way of example, said storage means (3) comprises a chargeable lithium-ion battery, which is commonly referred to as a Li-ion battery.

The charging system (100) comprises second detection means (4) configured to detect the storage power (c) stored in the storage means (3) and generate a second datum (cx) indicative of the storage power (c) stored in the storage means (3).

A DC/AC inverter (5) is connected to the storage means (3) to receive the DC output power (a) at 47-53V from the storage means (3) and convert it into AC supply power (e) at 220-230V.

More precisely, the current from the storage means (3) is converted from DC to AC.

The charging system (100) further comprises a socket unit (7) comprising at least one socket (71, 72) for electric vehicles (H) suitable for being connected to a charging connector (H1) of an electric vehicle (H). The socket unit (7) is suitable for receiving the AC supply power (e) from the DC/AC inverter (5).

In the embodiment shown in the attached figures, the socket unit (7) of the charging system (100) comprises two sockets (71, 72).

Otherwise said, the supply power (e) from the DC/AC inverter (5) is suitable for powering the socket or sockets (71, 72) of the socket unit (7) that are connected to charging connectors (H1) of an electric vehicle (H).

The charging system (100) according to the invention also comprises connection detectors (r1, r2), one for each socket, configured to detect whether the socket (71, 72) is connected to a corresponding charging connector (H1) of an electric vehicle and transmit a corresponding signal (s1, s2) indicating whether the socket (71, 72) is connected or not to the charging connector (H1).

The charging system (100) further comprises a power control unit (8) installed between said DC/AC inverter (5) and said socket unit (7) and configured to control the AC supply power (e) from the DC/AC inverter (5) to the socket unit (7).

The power control unit (8) comprises a power controller (81, 82) for each socket (71, 72).

Therefore, in the embodiment shown in the Figures, the power control unit (8) comprises two power controllers (81, 82). The power controllers (81, 82) are configured to control a fraction (e1, e2) of the supply power (e) supplied to each socket (71, 72). Otherwise said, said power controllers (81, 82) control the amount of current transferred from the socket (71, 72) to the charging connector (H1) of the vehicle (H).

Furthermore, the charging system (100) comprises a control unit (6) operatively connected to the first detection means (2), to the second detection means (4), and to the connection detectors (r1, r2) to receive the first datum (px), the second datum (cx), and the signals (s1, s2).

The control unit (6) is connected to the detection means (2, 4) and to the connection detectors (r1, r2) by means of wired or wireless technology.

The control unit (6) is operatively connected to the power control unit (8) to control the output power (a) from the storage means (3), which is converted into supply power (e) in the DC/AC inverter (5) and goes to the socket unit (7) according to the data (px, cx) received from the detection means (2, 4).

The control unit (6) is connected to the power control unit (8) by means of wired or wireless technology.

The control unit (6) is configured to manage the power controllers (81, 82) of the power control unit (8) so that the sockets (71, 72) connected to the charging connectors (H1) of respective electric vehicles (H) receive equal fractions (e1, e2) of the supply power (e).

Therefore, in the embodiment shown in the attached figures, wherein the power control unit (8) comprises two power controllers (81, 82) associated with the two sockets (71, 72), the control unit (6) is configured in such a way that, when both sockets (71, 72) are connected to respective charging connectors (H1) of electric vehicles (H), the same amount of power reaches the two sockets (71, 72) so that the two connected vehicles are charged in the same way.

Additionally, the charging system (100) comprises a powerboard (Q) to which the electronic components of the system (100) are connected and which comprises conventional safety devices, control devices, and signaling devices that ensure the compliance of the entire charging system (100) with the current safety regulations.

The charging system (100) according to the invention is not connected to an external power supply network and therefore the first detection means (2), the DC/AC inverter (5), the second detection means (4), the power control unit (8), the control unit (6) and the connector detectors (r1, r2) are all powered exclusively by the storage means (3). In this regard, the DC/AC inverter (5) is an island-type inverter.

Since the charging system (100) is not connected to an external power supply network, said charging system (100) can be defined as a completely autonomous and self-sufficient charging system (100).

The control unit (6) is equipped with means that allow the storage means (3) to be preserved so that the storage means (3) constantly contains an amount of storage charge or power (c) that is sufficient to power the first detection means (2), the DC/AC inverter (5), the second detection means (4), the power control unit (8) and the control unit (6) in such a way that these elements are constantly active.

In view of the above and with reference to Fig. 1A, said control unit (6) comprises a memory (60) wherein a low power threshold value (sp1) and a high power threshold value (sp2) are stored.

The control unit (6) comprises:
- a first comparator (61) configured to compare the low power threshold value (sp1) with the second datum (cx) detected by the second detection means (4); and
- a second comparator (62) configured to compare the high power threshold value (sp2) with the second datum (cx) detected by the second detection means (4).

By way of example, both the low power threshold value (sp1) and the high power threshold value (sp2) may be defined as a percentage of the maximum storage power of the storage means (3).

Preferably, the low power threshold value (sp1) is equal to 30% of the maximum storage power of the storage means (3).

Preferably, the high power threshold value (sp2) is equal to 50% of the maximum storage power of the storage means (3).

If the maximum storage power of the storage means (3) is 6 kW, then the low power threshold value (sp1) is approximately 1.8 kW, whereas the high power threshold value (sp2) is approximately 3 kW.

The control unit (6) is configured in such a way that:
- every time the first comparator (61) detects that the second datum (cx) is lower than the low power threshold value (sp1), said control unit (6) disconnects or stops the supply of output power (a) from the storage means (3) to the socket unit (7); and
- after a previous stop or disconnection of the supply of output power (a), the supply of output power (a) to the socket unit (7) is re-enabled when the second comparator (62) detects that the second datum (cx) is higher than the high power threshold value (sp2).

Therefore, as soon as the storage power (c) stored in the storage means (3) falls below the low power threshold value (sp1), the power supply to the sockets (71, 72) is immediately disconnected so that no power is taken from the storage means (3), said power being used to power the other elements of the charging system (100).

Then, the charging system (100) remains in standby until the storage power (c) exceeds the high power threshold value (sp2). In such a case, as soon as the storage power (c) stored in the storage means (3) exceeds the high power threshold value (sp1), the control unit (6) immediately re-enables the supply of the output power (a) from the storage means (3) to the sockets (71, 72).

The control unit (6) comprises an adder (63) configured to add the first datum (px) and the second datum (cx) in order to output a total power datum (Pcp).

The control unit (6) comprises computational means (64) configured to receive the total power datum (Pcp) as input and calculate at least one value indicating the supply power (e) to be supplied to the socket unit (7) based on the total power datum. Based on such a value, the control unit (6) operates the power controllers (81, 82) so that the socket unit (7) receives a supply power (e) concordant with the at least one value calculated by the computational means (64).

In particular, given that in the embodiment of the invention the socket unit (7) comprises two or more sockets (71, 72), the computational means (64) are configured to calculate values (v1, v2) indicating fractions (e1, e2) of the supply power (e) that are to be supplied to the sockets (71, 72) connected to the respective charging connectors (H1) of vehicles (H) based on the total power datum (Pcp) and on the number of sockets (71, 72) connected to respective charging connectors (H1) of vehicles (H).

Otherwise said, the computational means (64) are configured in such a way as to:
- input the total power datum (Pcp) and the signal (s1, s2) from the connector detectors (r1, r2) indicating how many and which sockets (71, 72) are connected; and
- output values (v1, v2) indicating the fractions (e1, e2) of the supply power (e) to be supplied to each socket (71, 72).

Based on these values (v1, v2), the control unit (6) operates the power controllers (81, 82) so that fractions (e1, e2) of supply power (e) corresponding to the values (v1, v2) output by the computational means (64) reach the sockets (71, 72).

In particular, said computational means (64) comprise a look-up table (65) comprising:
- a range vector (66) comprising a plurality of power ranges (66a, 66b, 66c, 66d);
- a connected socket combination vector (67) for each range vector (66) comprising combinations (67a, 67b, 67c) indicating how many and which sockets (71, 72) are connected to charging connectors (H1);
- values (v1, v2) for each combination (67a, 67b, 67c) of each power range (66a, 66b, 66c, 66d) indicating the supply power (e) to be supplied to each socket (71, 72) connected to the respective charging connectors (H1) of vehicles (H).

The look-up table (65) is configured to receive the total power datum (Pcp), identify the power range (66a, 66b, 66c, 66d) in which the total power datum (Pcp) falls, detect which and how many sockets (71, 72) are connected to charging connectors (H1) and then output the corresponding values (v1, v2) indicating the fraction (e1, e2) of supply power (e) to be supplied to each socket (71, 72).

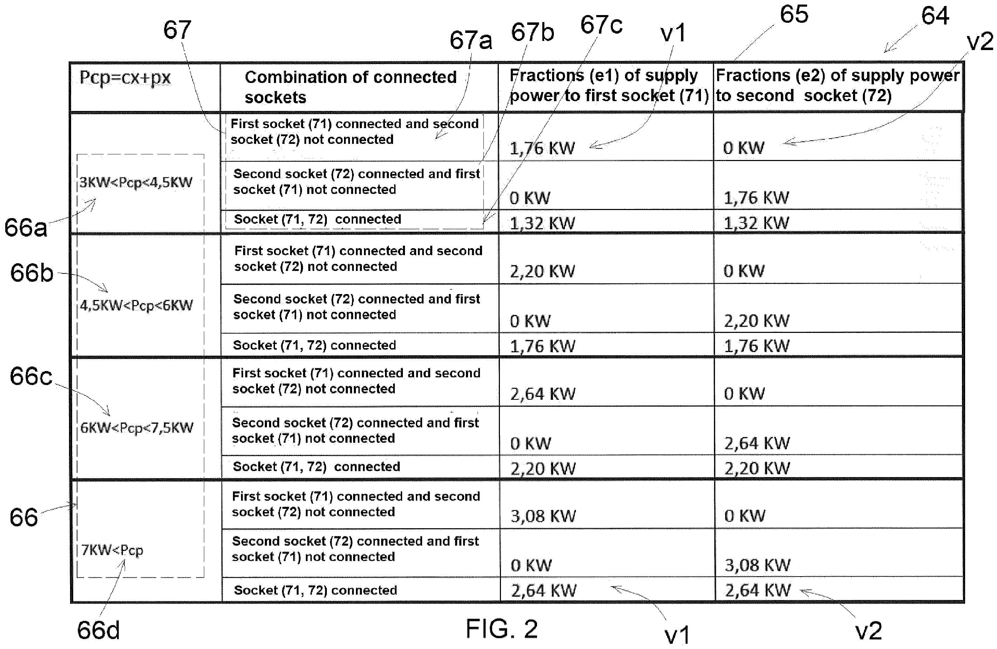

For illustrative purposes only, Fig. 2 shows a look-up table (65) relative to the charging system (100) comprising the socket unit (7) consisting of two sockets (71, 72) and wherein the range vector (66) comprises four power ranges (66a, 66b, 66c, 66d), namely a first power range (66a) between 3 and 4.5 kW, a second power range (66b) between 4.5 and 6 kW, a third power range (66c) between 6 and 7.5 kW, and a fourth power range (66d) higher than 7.5 kW.

Considering that there are only two sockets (71, 72) and excluding the combination in which no socket (71, 72) is connected, then the combination vector (67) comprises exclusively three combinations (67a, 67b, 67c), namely:
- a first combination (67a) wherein the first socket (71) is connected to a respective charging connector (H1), and the second socket (72) is not connected;
- a second combination (67b) wherein the second socket (72) is connected to a respective charging connector (H1) and the first socket (71) is not connected;
- a third combination (67c) wherein both sockets (71, 72) are connected to respective charging connectors (H1) of vehicles (H).

By way of example, taking into account a situation in which the total power datum (Pcp) is 4.8 kW and both sockets (71, 72) are connected to respective charging connectors (H1) of vehicles (H), then the output values (v1, v2) from the look-up table will be equal to 1.76 kW for both sockets.

Obviously, the control unit (6) will set the power controllers (81, 82) so that each socket (71, 72) receives a fraction (e1, e2) of supply power (e) equal to 1.76 kW.

As mentioned above, the system (100) is not connected to the power supply network and therefore when the storage power (c) in the storage means (3) falls below the low threshold value (sp1), the control unit (6) immediately disconnects the power supply to the sockets (71, 72).

The system (100) remains in the "non-supply" state until the storage power (c) in the storage means (3) exceeds the upper threshold value (sp2).

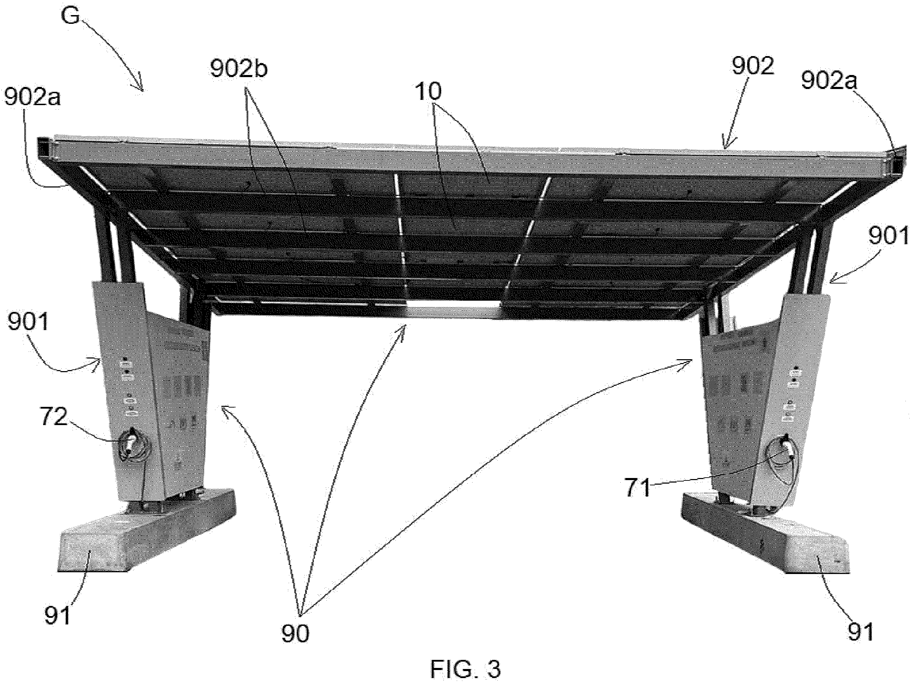

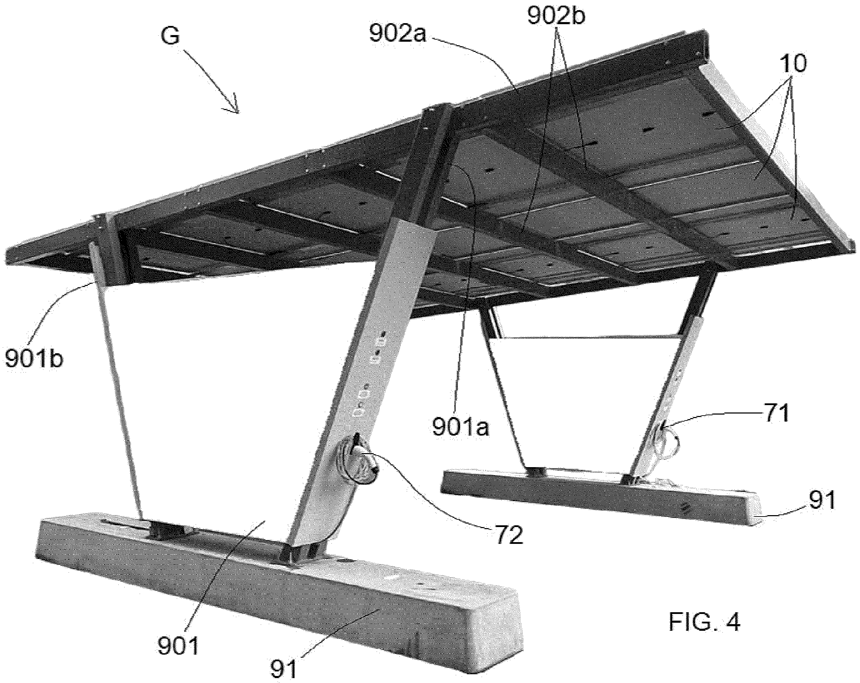

Preferably, the charging system (100) is associated with a charging canopy (9). In particular, the charging system (100) and the charging canopy (9) define a charging station (G) according to the invention, as shown in Figs. 3 and 4.

With reference to Figs. 3 and 4, the charging canopy (9) comprises:
- a bridge structure (90) comprising two lateral structures (901) and a roof (902) supported by the two lateral structures (901);
- two opposite ballasts (91), whereon one of the two lateral structures (901) is attached.

The electric vehicles (H) are suitable for being parked under the bridge structure (90) while they are being charged.

The ballasts (91) are made of concrete and are sized and certified for winds of up to 120 km/h. Therefore, the installation of the charging canopy (9) does not require excavation works or geological surveys.

Each one of the two lateral structures (901) comprises a front upright (901a) and a rear upright (901b). Each upright has a lower end attached to the ballast (91) and an upper end opposite said lower end.

The roof (902) comprises:
- two side-members (902a) parallel to each other, each of them being attached to the upper ends of the uprights of one of the two lateral structures (901);
- a plurality of crossmembers (902b) parallel to each other and mounted astride the two side-members (902a).

The uprights (901a, 901b) are connected inferiorly to the ballasts (91) and superiorly to the side-members (902a) of the roof (902) by means of reversible connecting means.

Similarly, the crossmembers (902b) are connected to the side-members (902a) by means of reversible connection means.

The reversible connection means preferably comprise bolts inserted into respective holes formed in the side-members (902a), in the crossmembers (902b), in the uprights (901a, 901b) and in the ballasts (91).

The bolts greatly facilitate the assembly and disassembly of the entire canopy (9).

The renewable energy generators (1) and, in particular, the photovoltaic panels (10), are mounted on the roof (902) of the canopy (9).

The powerboard (Q) suitable for containing the various certified electric and electronic components of the charging system (100) is mounted on one of the two ballasts (91).

Preferably, a plexiglass cover is applied on the lateral structure (901) where the cabinet is installed, in order to conceal and hide the cabinet.

The sockets (71, 72) are mounted on the front uprights (901a) of the two lateral structures (901) of the bridge structure (90) of the canopy (9).

Numerous variations and modifications of detail may be made to the present embodiment of the invention, within the scope of a person skilled in the art, but still within the scope of the invention as expressed by the appended claims.

## Claims

1. Charging station (G) comprising a canopy (9) and a charging system (100) for charging electric vehicles with renewable energy sources; said charging system (100) comprising:
- renewable energy generators (1) configured to convert energy from renewable energy sources into generated DC electric power (p); wherein said canopy (9) supports said renewable energy generators (1);
- first detection means (2) configured to detect the generated DC electric power (p) from the renewable energy generators (1) and generate a first datum (px) indicative of the generated electric power (p);
- a storage means (3) connected to the renewable energy generators (1) to receive and store the generated electric power (p) from the renewable generators (1) as input, so that a storage power (c) is present in said storage means (3); said storage means (3) being configured to output a DC output power (a);
- second detection means (4) configured to detect the storage power (c) stored in the storage means (3) and generate a second datum (cx) indicative of the storage power (c) stored in the storage means (3);
- a DC/AC inverter (5) connected to the storage means (3) to receive the DC output power (a) from the storage means (3) and convert it into an AC supply power (e);
- a socket unit (7) comprising at least one socket (71, 72) suitable for being connected to a charging connector (H1) of a vehicle (H); wherein the socket unit (7) is suitable for receiving AC supply power (e) from the DC/AC inverter (5);
- a power control unit (8) installed between said DC/AC inverter (5) and said socket unit (7) and configured to control the AC supply power (e) from the DC/AC inverter (5) to the socket unit (7); said power control unit (8) comprises a power controller (81, 82) for each socket (71, 72); and
- a control unit (6) operatively connected to the first detection means (2) and to the second detection means (4) to receive the first datum (px) and the second datum (cx); wherein said control unit (6) is operatively connected to said power control unit (8) to adjust the output power (a) from the storage means (3) which is converted into output power in the DC/AC inverter (5) and goes to the socket unit (7) according to the data (px, cx) received from the detection means (2, 4)
wherein said charging system (100) is not connected to any external power supply network and said first detection means (2), said DC/AC inverter (5), said second detection means (4), said power control unit (8), and said control unit (6) are all powered exclusively by the storage means (3);
wherein said control unit (6) comprises:
- a memory (60) wherein a low power threshold value (sp1) and a high power threshold value (sp2) are stored;
- a first comparator (61) configured to compare the low power threshold value (sp1) with the second datum (cx) detected by the second detection means (4); and
- a second comparator (62) configured to compare the high power threshold value (sp2) with the second datum (cx) detected by the second detection means (4);
wherein said control unit (6) is configured in such a way that:
- every time the first comparator (61) detects that the second datum (cx) is lower than the low power threshold value (sp1), said control unit (6) disconnects or stops the supply of the output power (a) from the storage means (3) to the socket unit (7); and
- after a previous stop or disconnection of the supply of output power (a), the supply of output power (a) to the socket unit (7) is re-enabled when the second comparator (62) detects that the second datum (cx) is higher than the high power threshold value (sp2).

2. The charging station (G) according to claim 1, wherein said socket unit (7) comprises two or more sockets (71, 72).

3. The charging station (G) according to claim 2, wherein said control unit (6) is configured to manage the power controllers (81, 82) of the power control unit (8) so that the sockets (71, 72) connected to charging connectors (H1) of respective vehicles (H) receive equal fractions (e1, e2) of the supply power (e).

4. The charging station (G) according to any one of the preceding claims, wherein said control unit (6) comprises:
- an adder (63) configured to add the first datum (px) and the second datum (cx) in order to output a total power datum (Pcp);
- computational means (64) configured to receive said total power datum (Pcp) as input and calculate at least one value indicating the supply power (e) to be supplied to the socket unit (7) based on said total power datum (Pcp);
wherein said control unit (6) is configured to operate the power controllers (81, 82) so that the socket unit (7) receives a supply power (e) concordant with the at least one value calculated by the computational means (64).

5. The charging station (G) according to claim 4 when dependent on claim 2, wherein the computational means (64) are configured to calculate values (v1, v2) based on the total power figure (Pcp) and on the number of sockets (71, 72) connected to respective charging connectors (H1) of vehicles (H), said values (v1, v2) indicating fractions (e1, e2) of supply power (e) to be supplied to the sockets (71, 72) connected to respective charging connectors (H1) of vehicles (H); wherein said control unit (6) is configured to manage the power controllers (81, 82) so that the sockets (71, 72) receive fractions (e1, e2) of supply power (e) concordant with the values (v1, v2) provided as output from the computational means (64).

6. The charging station (G) according to claim 5, wherein said computational means (64) comprise a look-up table (65) comprising:
- a range vector (66) comprising a plurality of power ranges (66a, 66b, 66c, 66d);
- a connected socket combination vector (67) for each range vector (66) comprising combinations (67a, 67b, 67c), each one indicating how many and which sockets (71, 72) are connected to charging connectors (H1);
- values (v1, v2) for each combination (67a, 67b, 67c) of each power range (66a, 66b, 66c, 66d) indicating the supply power (e) to be supplied to each socket (71, 72) connected to the respective charging connectors (H1) of vehicles (H);
wherein the look-up table (65) is configured to receive the total power datum (Pcp) as input, identify the power range (66a, 66b, 66c, 66d) in which the total power datum (Pcp) falls, detect which and how many sockets (71, 72) are connected to charging connectors (H1) and then output the corresponding values (v1, v2) indicating the fraction (e1, e2) of supply power (e) to be supplied to each socket (71, 72).

7. The charging station (G) according to any one of the preceding claims, wherein said renewable energy generators (1) comprise photovoltaic panels (10).

8. The charging station (G) according to any one of the preceding claims; wherein said charging canopy (9) comprises:
- a bridge structure (90) comprising two lateral structures (901) and a roof (902) supported by the two lateral structures (901);
- two opposite ballasts (91) whereon one of the two lateral structures (901) is attached
wherein said renewable energy generators (1) of the charging system (100) are mounted on the roof (902) of the bridge structure (90);
wherein a socket (71, 72) of the socket unit (7) of the charging system (100) is mounted on at least one of the two lateral structures (901).

9. The charging station (G) according to claim 8, wherein each of the two lateral structures (901) comprises a front upright (901a) and a rear upright (901b); each upright (901a, 901b) has a lower end attached to the ballast (91) and an upper end opposite said lower end; wherein the roof (902) comprises:
- two side-members (902a) parallel to each other, each of them being attached to the upper ends of the uprights of one of the two lateral structures (901);
- a plurality of crossmembers (902b) parallel to each other and mounted astride the two side-members (902a);
wherein the uprights (901a, 901b) are connected inferiorly to the ballasts (91) by means of bolts and superiorly to the side-members (902a) of the roof (902) by means of bolts;
wherein the crossmembers (902b) are connected to the side-members (902a) by means of bolts.
